(19) Europäisches Patentamt
European Patent Office
Office européen des brevets

(11) **EP 4 229 481 B1**

(12) **FASCICULE DE BREVET EUROPEEN**

(45) Date de publication et mention
de la délivrance du brevet:
**18.06.2025 Bulletin 2025/25**

(21) Numéro de dépôt: **21798578.7**

(22) Date de dépôt: **12.10.2021**

(51) Classification Internationale des Brevets (IPC):
**G03B 37/02** (2021.01)    **G06T 3/4038** (2024.01)
**H04N 23/698** (2023.01)

(52) Classification Coopérative des Brevets (CPC):
**G06T 3/4038; G03B 37/02; H04N 23/698**

(86) Numéro de dépôt international:
**PCT/EP2021/078102**

(87) Numéro de publication internationale:
**WO 2022/078979 (21.04.2022 Gazette 2022/16)**

(54) **PROCEDE ET DISPOSITIF D'IMAGERIE ASTRONOMIQUE EN CHAMP ELARGI**

ASTRONOMISCHE BREITFELD-BILDGEBUNGSVORRICHTUNG UND VERFAHREN

PROCESS AND DEVICE FOR WIDE FIELD ASTROPHOTOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2020 FR 2010665**

(43) Date de publication de la demande:
**23.08.2023 Bulletin 2023/34**

(73) Titulaire: **Vaonis**
**34830 Clapiers (FR)**

(72) Inventeurs:
• **KREBS, Gilles**
**34830 Jacou (FR)**
• **DESTRUEL, Christophe**
**34090 Montpellier (FR)**

(74) Mandataire: **Osha BWB**
**2, rue de la Paix**
**75002 Paris (FR)**

(56) Documents cités:
**US-A1- 2006 245 640    US-A1- 2011 150 329**

• **VEER EKANT: "Making Milky Way Panoramas - AMATEUR ASTROPHOTOGRAPHY- Astrophotography", 5 December 2019 (2019-12-05), XP055815606, Retrieved from the Internet <URL:https://www. amateurastrophotography.com/blog/2019/12/5/ making-milky-way-panoramas> [retrieved on 20210618]**

Remarques:
Le dossier contient des informations techniques présentées postérieurement au dépôt de la demande et ne figurant pas dans le présent fascicule.

# Description

## Domaine technique de l'invention

La présente description concerne un procédé et un dispositif d'imagerie astronomique en champ élargi.

## Etat de la technique

Un instrument d'imagerie astronomique comprend généralement un détecteur bidimensionnel et un système optique configurés pour générer une image d'une scène, par exemple une constellation dans le ciel.

Le champ objet d'un tel instrument d'imagerie astronomique, appelé champ « intrinsèque » de l'instrument, correspond à l'ensemble des points dans l'espace objet de cet instrument dont on peut former une image, et dépend de plusieurs paramètres, dont la taille de la surface de détection du détecteur et les caractéristiques du système optique (e.g. distance focale, ouverture).

Dans le domaine de l'astronomie, les objets étudiés (les astres) couvrent souvent une très large portion de l'espace objet (le ciel) qui excède les dimensions du champ intrinsèque de l'instrument, ce qui empêche l'observation de l'intégralité de ces objets.

Dans ce contexte, il est utile d'accroître le champ objet de l'instrument au-delà de son champ intrinsèque pour obtenir des images correspondant à un champ objet plus grand que ce que pourrait capturer nativement l'instrument. Dans la présente description, ces images sont appelées des images « en champ élargi ».

Plutôt que d'augmenter le champ intrinsèque de l'instrument en changeant les caractéristiques du système optique, il est possible d'obtenir un champ élargi en utilisant la technique dite de « mosaïquage », décrite par exemple dans [REF. 1], [REF.3], [REF.4].

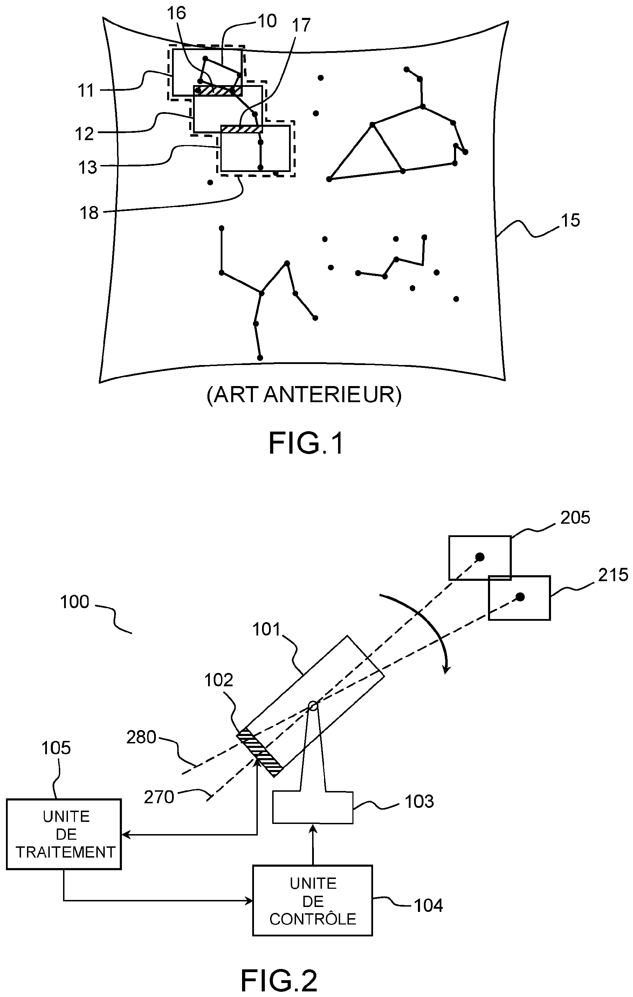

Dans la technique de mosaïquage, illustrée par exemple sur la FIG. 1, l'objet étudié (dans cet exemple une constellation 10 dans le ciel 15) est imagé en plusieurs étapes. L'instrument acquiert des images 11, 12, 13 de portions de l'objet (« images brutes ») dont les dimensions sont limitées par le champ intrinsèque de l'instrument. Les images brutes 11, 12, 13 sont ensuite assemblées par une technique de recalage d'image (d'après l'expression anglaise « image registration ») pour reconstituer une image à champ élargi 18 qui contient l'objet étudié 10 et qui correspond à un champ plus grand que le champ intrinsèque de l'instrument avec lequel sont obtenues les images brutes 11, 12, 13.

Pour effectuer le recalage des images, il est connu d'acquérir des images brutes successives 11, 12, 13 présentant des parties communes 16,17 (zone de recouvrement) qui permettent de comparer ces images.

Typiquement, dans la technique de mosaïquage, le taux de recouvrement, défini comme la taille de la partie commune 16 entre deux images brutes successives 11, 12 par rapport à la taille d'une des images brutes 11, 12, est compris entre environ 5 % et environ 40%.

Par ailleurs, il est connu d'augmenter le rapport signal à bruit (SNR) d'une image astronomique en utilisant la technique d'« empilement » (ou « stacking » selon le terme anglais) décrite par exemple dans [REF 2].

Pour cela, une pluralité d'images d'une même scène sont acquises et sommées entre elles, l'image résultante (appelée image empilée dans la présente description) présentant un SNR supérieur au SNR de chaque image initiale ; ce procédé peut être vu comme un moyennage du bruit des images initiales pour réduire le niveau de bruit.

Il serait possible de combiner mosaïquage et empilement en acquérant une pluralité d'images brutes pour chaque portion de scène puis en les sommant. Les images empilées de chaque portion ainsi obtenues présentent alors un SNR amélioré par rapport au SNR des images brutes de chaque portion. Les images empilées sont ensuite recalées pour reconstituer l'image en champ élargi, selon le procédé de mosaïquage connu. On réalise ainsi une mosaïque d'empilements. Dans un tel procédé, le SNR de l'image en champ élargi est en pratique similaire au SNR de chaque image empilée.

La présente description propose un procédé d'imagerie en champ élargi qui permet une augmentation du SNR par rapport au SNR obtenu avec un procédé de mosaïquage d'empilements tel que décrit ci-dessus.

## Résumé de l'invention

Dans la présente description, le terme « comprendre » signifie la même chose que « inclure » ou « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un dispositif d'imagerie astronomique en champ élargi d'une scène selon la revendication 1.

Dans la présente description, le dispositif d'imagerie acquière des images brutes de « portions » de scène, la taille géométrique des portions étant limitée par le champ intrinsèque de l'instrument. L'ensemble des portions de la scène acquises au cours du temps forme un « chemin de champ ». On appelle deux portions successives, deux portions acquises successivement par le détecteur optique, les acquisitions des images de deux portions successives étant séparées par un intervalle de temps par exemple inversement proportionnel à une cadence d'acquisition du détecteur.

Dans la présente description, le détecteur bidimensionnel est généralement formé d'une matrice à deux dimensions de détecteurs élémentaires et on appelle « image brute » une matrice de valeurs numériques, chaque valeur numérique dépendant d'un nombre de photons reçus par un ou plusieurs détecteurs élémentaires du détecteur bidimensionnel lorsqu'une image d'une portion de la scène de dimensions égales aux dimensions du champ intrinsèque est formé par le système d'imagerie sur la surface de détection. Les éléments de la matrice sont appelés « points de l'image », et la valeur numérique associée à un point de l'image est appelée « valeur du point de l'image ».

Dans un dispositif d'imagerie astronomique selon le premier aspect, en vertu du fait que pour chaque acquisition d'une image brute, une nouvelle image étendue est calculée à partir de ladite image brute et d'une image étendue calculée précédemment, on crée un empilement « glissant » de nature à considérablement augmenter le SNR du fait qu'un point de l'image étendue obtenue à la fin de l'acquisition correspond à un point du champ objet acquis un très grand nombre de fois. Selon un ou plusieurs exemples de réalisation, ladite partie commune entre deux portions successives de ladite pluralité de portions présente une surface supérieure ou égale à environ 85% du champ intrinsèque. On définit ainsi un taux de recouvrement, égal au rapport entre la partie commune entre deux portions successives de ladite pluralité de portions et le champ intrinsèque. Un dispositif d'imagerie astronomique selon le premier aspect permet de travailler, du fait de l'empilement glissant, avec un taux de recouvrement important, et d'obtenir une augmentation du SNR par rapport aux dispositifs connus.

En pratique, on cherchera à ce que deux portions successives de ladite pluralité de portions aient un recouvrement le plus grand possible mais strictement inférieur à 100 % dudit champ intrinsèque du système optique, afin d'avoir des images brutes successives toujours distinctes et d'accroître la taille de l'image étendue après chaque acquisition d'une image brute. Bien entendu, il peut arriver en cours d'acquisition et du fait d'aléa expérimentaux, que deux portions successives soient sensiblement confondues, bien que cela ne soit pas souhaité.

Ainsi, selon un ou plusieurs exemples de réalisation, ladite partie commune entre deux portions successives de ladite pluralité de portions présente une surface strictement supérieure à 90% du champ intrinsèque et strictement inférieure à 100% du champ intrinsèque.

Selon un ou plusieurs exemples, ladite image étendue est calculée à partir de l'image étendue calculée précédemment :

- en sommant les valeurs de points de l'image étendue calculée précédemment aux valeurs de points de l'image brute qui correspondent à des points identiques du champ objet ; et
- en complétant l'image étendue calculée précédemment par des points de l'image brute qui correspondent à des points du champ objet non compris dans l'image étendue calculée précédemment.

Par « sommation » de valeurs de points de plusieurs images entre elles, il est entendu au sens de la présente description, toute opération de combinaison linéaire ou non linéaire entre ces valeurs de points.

Dans le dispositif ainsi décrit, et contrairement à un dispositif qui mettrait en œuvre une simple technique de mosaïquage d'empilements, des valeurs de points de l'image étendue calculée précédemment et de la nouvelle image brute sont sommées, lorsque ces points correspondent à un même point du champ objet.

Il en résulte une augmentation accrue du SNR, notamment pour un temps d'observation et/ou une taille de champ élargi donnés.

Selon un ou plusieurs exemples de réalisation, la sommation comprend une somme simple, les valeurs de points de l'image étendue calculée précédemment étant additionnées aux valeurs de points de l'image brute qui correspondent à des points identiques du champ objet.

Selon un ou plusieurs exemples de réalisation, la sommation comprend une somme pondérée, les valeurs des points de chaque image pouvant être multipliées par un ou plusieurs facteurs avant d'être additionnées. Lesdits facteurs peuvent par exemple servir à corriger un défaut d'exposition, ou l'effet d'une aberration optique pour quelques points de l'image uniquement.

Selon un ou plusieurs exemples de réalisation, la sommation de valeurs de points de l'image comprend une somme conditionnelle, des critères pouvant être définis pour déterminer quels points des images doivent être sommés.

Selon un ou plusieurs exemples, les critères comprennent un écart maximal de la valeur d'un point de l'image par rapport à une médiane ou une moyenne calculée sur des valeurs de points d'autres images acquises précédemment, lesdits points correspondant au même point du champ objet. Selon un ou plusieurs exemples, le contrôle dudit axe optique comprend une compensation, au moins partielle, des effets de la rotation de la Terre sur la position desdites portions dans la scène. Cela permet de pouvoir compenser en partie ou totalement l'effet du mouvement de la voûte céleste lié à la rotation de la Terre et de déterminer un chemin de champ en contrôlant la position de chaque portion de la scène par rotation de l'axe optique. Alternativement, les positions des portions de la scène résultent du mouvement de la voûte céleste lié à la rotation de la Terre.

Selon un ou plusieurs exemples, ladite pluralité de positions dudit axe optique est calculée à partir d'un temps d'observation prédéterminé.

Le temps d'observation au sens de la présente description (ou « temps de mesure ») est le temps d'acquisition de ladite pluralité d'images brutes de la pluralité des portions de la scène par le détecteur optique pour obtenir une image en champ élargi de ladite scène.

Cela permet avantageusement à un utilisateur de choisir le temps que va prendre l'acquisition d'une image en champ élargi.

Dans cette configuration, l'utilisateur spécifie le champ élargi dont il souhaite obtenir une image et le temps d'observation. L'unité de traitement détermine alors un chemin de champ à partir de ces deux paramètres et les positions successives de l'axe optique pour acquérir les images des portions du chemin de champ.

Dans d'autres exemples de réalisation, le temps d'observation n'est pas prédéterminé. Par exemple, l'utilisateur peut décider d'interrompre la mesure au moment souhaité.

Selon un ou plusieurs exemples, l'unité de contrôle est configurée pour le contrôle de la rotation dudit axe optique, de telle sorte à permettre des acquisitions successives de pluralités d'images brutes de portions de ladite scène, afin de balayer plusieurs fois le champ élargi. Ainsi, les portions de la scène acquises au cours du temps et formant le chemin de champ peuvent être acquises de façon cyclique, les portions de la scène pour chaque cycle pouvant être confondues ou décalées. Cela permet à l'utilisateur d'obtenir une image en champ élargi sans contrainte de temps. Le dispositif balaye plusieurs fois le champ élargi pour obtenir une image en champ élargi dont le SNR augmente au fur et à mesure des balayages. L'acquisition de l'image en champ élargi cesse, par exemple, lorsque l'utilisateur interrompt la mesure.

Selon un deuxième aspect, la présente description concerne un procédé d'imagerie astronomique en champ élargi d'une scène selon la revendication 6.

Selon un ou plusieurs exemples, ladite image étendue est calculée à partir de l'image étendue calculée précédemment :

- en sommant les valeurs des points de l'image étendue calculée précédemment aux valeurs des points de l'image brute qui correspondent à des points identiques du champ objet ; et
- en complétant l'image étendue calculée précédemment par des points de l'image brute qui correspondent à des points du champ objet non compris dans l'image étendue calculée précédemment.

Selon un ou plusieurs exemples, le procédé comprend, en outre, après l'acquisition de chaque image brute, une étape de filtrage de ladite image brute avant le calcul de l'image étendue, pour améliorer la qualité de l'image étendue.

Le filtrage de ladite image brute comprend par exemple la suppression de possibles artefacts des images brutes, e.g. la suppression de points d'images aux valeurs anormales, la suppression d'artefacts dus au détecteur et au système optique, la correction des couleurs, la suppression du fond du ciel et la suppression de certaines étoiles.

Selon un ou plusieurs exemples, le calcul, pour chaque acquisition d'une image brute à un temps donné d'une image étendue de taille plus grande qu'une image étendue calculée précédemment comprend un sur-échantillonnage de l'image brute par interpolation de l'image brute.

Selon un ou plusieurs exemples, le procédé comprend en outre l'acquisition d'au moins une deuxième pluralité d'images brutes de portions de ladite scène, de façon à balayer au moins une deuxième fois le champ élargi.

Autrement dit, les portions de la scène acquises au cours du temps et formant le chemin de champ peuvent être acquises de façon cyclique, les portions de la scène pour chaque cycle pouvant être confondues ou décalées.

Cela permet à l'utilisateur d'obtenir une image en champ élargi sans contrainte de temps. Le dispositif balaye plusieurs fois le champ élargi pour obtenir une image en champ élargi dont le SNR augmente au fur et à mesure des balayages. L'acquisition de l'image en champ élargi cesse, par exemple, lorsque l'utilisateur interrompt la mesure.

Selon un ou plusieurs exemples, ladite partie commune entre deux portions successives de ladite pluralité de portions présente une surface supérieure ou égale à environ 85% du champ intrinsèque. Autrement dit, cela signifie que le taux de recouvrement entre deux portions successives de ladite pluralité de portions est supérieur ou égal à environ 85%. Cela permet d'avoir une augmentation du SNR sur une grande partie de chaque image étendue, en maximisant l'étendue des parties communes entre chaque nouvelle image brute acquise à un temps donné et chaque image étendue calculée à un temps précédent.

Cela permet aussi d'améliorer le calcul d'une nouvelle image étendue à un temps donné en facilitant la comparaison entre une image brute acquise audit temps donné et une image étendue calculée à un temps précédent car un plus grand nombre de points d'images des deux images correspondent à des mêmes points du champ objet.

En pratique, on cherchera à ce que deux portions successives de ladite pluralité de portions aient un recouvrement strictement inférieur à 100 % dudit champ intrinsèque du système optique, afin d'avoir des images brutes successives toujours distinctes et d'accroître la taille de l'image étendue après chaque acquisition d'image brute.

Les caractéristiques et avantages précités, ainsi que d'autres, apparaîtront à la lecture de la description détaillée qui suit, d'exemples de réalisation du dispositif et du procédé proposé. Cette description détaillée fait référence aux dessins annexés.

**Brève description des figures**

D'autres avantages et caractéristiques de l'invention apparaîtront à la lecture de la description, illustrée par les figures suivantes :

[FIG. 1], déjà décrite, représente un schéma simplifié illustrant un procédé de mosaïquage selon l'art antérieur.

[FIG. 2], représente un schéma simplifié illustrant un dispositif d'imagerie astronomique en champ élargi selon la présente description ;

[FIG. 3A], représente un schéma simplifié d'un objet à imager selon la présente description ;

[FIG. 3B], représente un schéma simplifié illustrant un exemple de portions de chemin de champ définies par des points-clés selon la présente description ;

[FIG. 3C], représente un schéma simplifié illustrant un exemple de chemin de champ selon la présente description ;

[FIG. 4], représente un schéma simplifié illustrant un procédé d'imagerie astronomique en champ élargi selon la présente description.

## Description détaillée de l'invention

Sur les figures, les éléments ne sont pas représentés à l'échelle pour une meilleure visibilité.

La FIG. 2 illustre un dispositif d'imagerie astronomique en champ élargi selon la présente description. Le dispositif 100 comprend un système optique 101 avec un axe optique 270 mobile en rotation, un détecteur bidimensionnel 102, par exemple agencé dans un plan focal du système optique 101, une unité de contrôle 104 de la rotation de l'axe optique, et une unité de traitement 105. Le dispositif 100 peut comprendre un socle 103 pour maintenir ledit système optique 102 et supporter son mouvement.

Le dispositif 100 permet d'acquérir plusieurs images brutes d'une scène, en général le ciel, et de combiner ces images au moyen de l'unité de traitement 105 configurée pour mettre en œuvre des étapes du procédé selon la présente description, afin de former une image en champ élargi plus grande qu'une des images brutes.

Pour une position donnée de l'axe optique, le système optique 101 et le détecteur 102 permettent l'acquisition d'une image dans ladite scène selon un champ donné, aussi appelé « champ intrinsèque » du dispositif dans la présente description. Le champ intrinsèque dépend principalement des caractéristiques des composants utilisés (par exemple les types de lentilles, les vergences des lentilles, le nombre d'éléments de détection du détecteur, et la taille de la surface de détection) et des agencements géométriques entre éléments (par exemple les distances entre lentilles).

Le détecteur 102 est formé par exemple d'un ensemble bidimensionnel d'éléments de détection et l'image fournie par le détecteur 102 est une matrice de valeurs numériques, chaque élément de la matrice (ou « point ») ayant une valeur numérique qui dépend du nombre de photons reçus par un ou plusieurs éléments de détection.

L'axe optique 270 du système optique 101 est mobile en rotation selon au moins deux axes. Il est possible de pivoter l'axe optique 270 selon lesdits axes de sorte que le système optique 101 pointe successivement plusieurs portions de ladite scène et permette l'acquisition successive d'images des portions successives sur le détecteur 102.

Bien que sur le schéma de la FIG. 2, il est représenté que l'axe optique 270 peut être pivoté jusqu'à une position 280 pour acquérir successivement les images des portions 205, 215, on comprendra que l'axe optique est en général pivoté pour permettre l'acquisition d'un grand nombre d'images brutes. Bien que cela ne soit pas visible sur la FIG. 2, en pratique le taux de recouvrement entre les portions 205 et 215 est avantageusement supérieur à 85%.

Le pointage successif de plusieurs portions de la scène pour acquérir plusieurs images est appelé balayage de la scène, ou balayage du champ élargi, dans la présente description.

La succession des portions successives parcourues lors du balayage est appelée chemin de champ dans la présente description. Chaque portion a une taille dans le champ objet du dispositif qui correspond au champ intrinsèque du dispositif.

L'unité de contrôle 104 est configurée pour le contrôle de l'axe optique 270, c'est-à-dire en particulier la mise en rotation de l'axe optique 270 et des parties solidaires de l'axe optique (le système optique 101 et le détecteur 102) pour effectuer un balayage d'une scène selon un chemin de champ.

L'unité de contrôle 104 est en outre configurée pour le contrôle de l'acquisition des images brutes au moyen du détecteur 102 lors du balayage de la scène par rotation de l'axe optique 270. L'unité de contrôle 104 permet de définir, par exemple, un temps de pose pour chaque acquisition d'une image brute, un taux de recouvrement entre deux portions successives du chemin de champ ou un temps d'observation, c'est-à-dire le temps que prend la mesure de l'image en champ élargi, afin de déterminer un chemin de champ particulier.

Selon un ou plusieurs exemples de réalisation, le temps d'observation recommandé dépend de l'objet observé et est en moyenne supérieur à environ 30 minutes. Il n'y a en général pas de temps recommandé maximum car le SNR de l'image augmente avec le temps d'observation.

L'unité de traitement 105 est configurée pour traiter les images brutes acquises par le détecteur 102.

En particulier, l'unité de traitement 105 est configurée, pour calculer, après chaque acquisition d'une image brute, une nouvelle image étendue à partir d'une image étendue calculée lors de l'acquisition précédente et de ladite image brute.

De façon générale, l'unité de traitement 105 et l'unité de contrôle 104 auxquelles il est fait référence dans la présente description peuvent faire partie d'un même système comprenant une ou plusieurs entités physiques, par exemple un ou plusieurs ordinateurs.

Lorsque dans la présente description, il est fait référence à des étapes de calcul ou traitement pour la mise en œuvre notamment d'étapes de procédés, il est entendu que chaque étape de calcul ou traitement peut être mis en œuvre par logiciel, hardware, firmware, microcode ou toute combinaison appropriée de ces technologies. Lorsqu'un logiciel est utilisé, chaque étape de calcul ou traitement peut être mise en œuvre par des instructions de programme d'ordinateur ou du code logiciel. Ces instructions peuvent être stockées ou transmises vers un support de stockage lisible par l'unité de traitement et l'unité de contrôle et/ou être exécutées par l'unité de contrôle et l'unité de traitement afin de mettre en œuvre ces étapes de calcul ou traitement.

Pour balayer une scène avec le dispositif selon la présente description, plusieurs chemins de champ sont possibles. Choisir un chemin de champ particulier revient à choisir une façon de balayer la totalité du champ élargi en acquérant des images des portions de ce champ.

De façon générale, le chemin de champ peut être défini par une liste de coordonnées définissant chaque portion du chemin de champ, par exemple une liste des coordonnées des centres successifs des portions du chemin de champ.

Selon un ou plusieurs exemples, pour déterminer un chemin de champ à partir d'un champ élargi, l'unité de contrôle 104 peut utiliser une portion définie comme la portion initiale, une portion définie comme la portion finale, puis interpoler des positions intermédiaires entre les positions des portions initiale et finale pour définir des portions intermédiaires. Le dispositif acquiert ensuite une image brute de chaque portion intermédiaire.

Selon un ou plusieurs exemples, il est possible de définir, en outre, des points particuliers (ou « points-clés » dans la présente description) dans le champ élargi. Le chemin de champ est alors calculé pour passer de façon ordonnée par ces points-clés, une succession de portions du chemin de champ entre points-clés successifs étant déterminé par interpolation selon la procédure décrite précédemment.

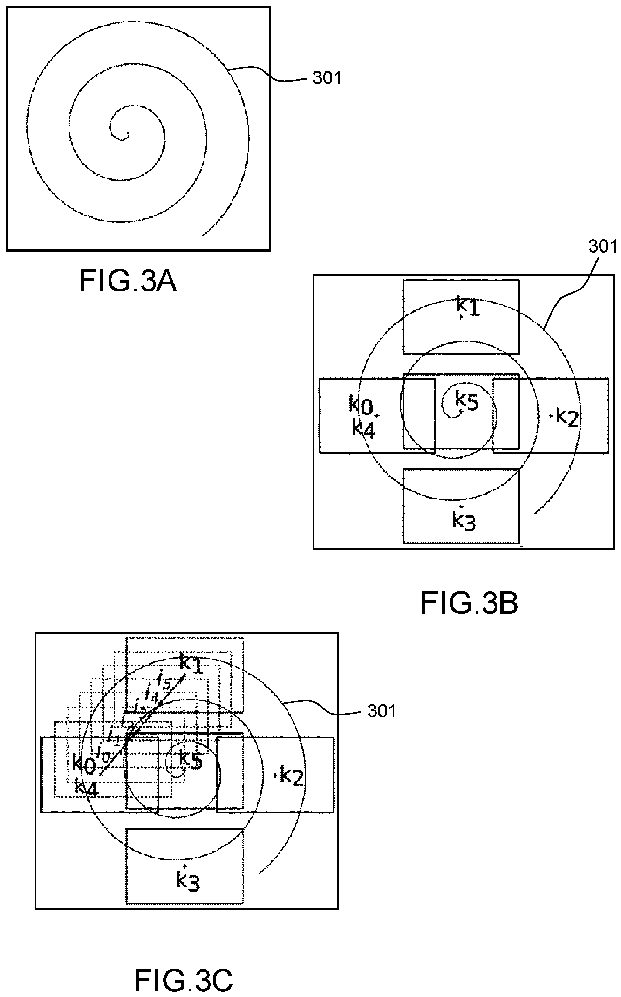

Les FIG. 3A, FIG. 3B et FIG. 3C illustrent de façon schématique un exemple de construction d'un chemin de champ dans lequel le balayage d'un champ élargi comprend un objet à imager 301, par exemple une galaxie.

La FIG. 3A illustre l'objet à imager 301 dont on veut faire une image avec le dispositif selon la présente description. Pour cela le dispositif va balayer l'objet à imager 301 selon un chemin de champ.

Dans l'exemple de la FIG. 3B, 6 points-clés (k0, k1, k2, k3, k4 et k5) sont définis. Le chemin de champ part du point-clé de référence k0, puis passe successivement par les points-clés k1, k2, k3, k4 et finit au point-clé k5. Les portions du chemin de champ sont ici identifiées par les coordonnées de leur centre. Dans l'exemple non-limitatif de la FIG. 3B, le mouvement du chemin de champ décrit une forme courbe, par exemple une forme de spirale et les points k0 et k4 sont confondus.

La FIG. 3C illustre, à titre d'exemple, comment une droite reliant les points k0 et k1 est interpolée pour définir une pluralité de positions intermédiaires i0 à i5, qui correspondent à des portions de champ intermédiaires dont des images seront acquises par le dispositif selon la présente description, entre l'image de la portion centrée en k0 et l'image de la portion centrée en k1.

De la même manière, il est possible de définir des portions intermédiaires entre les autres points-clés (de k1 jusqu'à k5) afin de définir entièrement le chemin de champ permettant d'obtenir l'image en champ élargi comprenant l'objet 301.

Bien qu'un chemin de champ particulier ait été décrit en détail au moyen des FIG. 3A, FIG. 3B et FIG. 3C, il existe d'autres modes de réalisation du dispositif selon la présente description dans lesquels le chemin de champ balaye le champ élargi d'une autre manière. Par exemple, il est possible de choisir un chemin de champ tel que le passage d'une portion de champ à une portion suivante comprenne soit un mouvement selon une première direction soit un mouvement selon une deuxième direction orthogonale à la première direction.

Le dispositif selon la présente description peut fonctionner selon plusieurs modes d'utilisation.

Dans un premier mode de réalisation, appelé « mode temps » dans la présente description, l'acquisition de l'image en champ élargi est effectuée en un temps limité, appelé temps d'observation $T_0$, qui est choisi par l'utilisateur.

Le temps d'observation est un temps s'écoulant pendant l'acquisition de l'image en champ élargi, c'est-à-dire entre l'instant auquel l'utilisateur lance l'acquisition et l'instant auquel l'acquisition se termine et où l'utilisateur peut observer l'image en champ élargi qu'il souhaite obtenir avec le dispositif.

Le temps d'observation peut par exemple être sélectionné par l'utilisateur après estimation de la taille de l'objet étudié (c'est-à-dire le champ élargi à imager) par rapport au champ intrinsèque du dispositif.

Par exemple, si l'objet étudié couvre une zone du ciel dont les dimensions sont quatre fois supérieures aux dimensions d'une zone du ciel qu'il est possible d'imager avec le champ intrinsèque du dispositif, alors l'utilisateur peut choisir un temps d'observation supérieur à quatre fois le temps optimal pour acquérir une image brute, avantageusement un temps d'observation supérieur ou égal à 10 fois cette valeur.

Dans le mode temps, l'utilisateur du dispositif sélectionne le temps d'observation $T_0$ et le champ élargi à imager puis le chemin de champ est calculé par l'unité de contrôle 104 en fonction du temps d'observation et du champ élargi.

Plus précisément, les coordonnées des portions du chemin de champ peuvent être calculées avant l'acquisition des images brutes, à partir du champ élargi, du temps d'observation et de paramètres auxiliaires présélectionnés lors de la construction du dispositif.

Dans le mode temps, les paramètres auxiliaires comprennent par exemple :

- un temps de pose d'une image brute $T_P$, c'est-à-dire l'intervalle de temps durant lequel le détecteur 102 va accumuler les photons provenant d'une portion de scène afin d'acquérir une image de cette portion; et
- une taille d'une image brute ($b_x$, $b_y$), qui est égal au champ intrinsèque de l'instrument.

L'utilisateur peut, s'il le souhaite, modifier les paramètres auxiliaires pour ajuster de façon précise les caractéristiques de l'acquisition des images brutes. Le chemin de champ est alors déterminé en fonction de ces paramètres et d'éventuels points-clés comme décrits précédemment.

Selon un deuxième mode de réalisation, appelée « mode continu » dans la présente description, le dispositif effectue un balayage continu du champ élargi pour obtenir une image en champ élargi dont le SNR augmente avec le temps.

Dans le mode continu, le temps d'observation n'est pas limité, l'utilisateur choisit uniquement le champ élargi. Le balayage du champ élargi cesse, par exemple, lorsque l'utilisateur choisit d'interrompre l'acquisition de l'image en champ élargi.

Dans le mode continu, le chemin de champ peut être calculé par l'unité de contrôle 104 pour balayer plusieurs fois le champ élargi de différentes manières. Cela signifie qu'à chaque balayage, le dispositif acquiert des images de portions différentes des portions déjà balayées à un balayage précédent. Cela permet d'obtenir une image étendue dont le SNR augmente avec le temps car, à chaque nouveau balayage, un plus grand nombre de points de l'image étendue sont issus d'une zone de recouvrement et peuvent donc être sommés. Dans le mode continu, les coordonnées des portions du chemin de champ peuvent être calculées, avant l'acquisition des images brutes, à partir du champ élargi et de paramètres auxiliaires.

Dans le mode continu, les paramètres auxiliaires comprennent par exemple :

- le temps de pose d'une image brute $T_P$ ;
- la taille d'une image brute ($b_x$, $b_y$) ;
- un taux de recouvrement $R_m$ ; et
- un décalage entre balayages ($\delta_x$, $\delta_y$).

Le taux de recouvrement $R_m$ est défini par le rapport entre la partie commune entre deux portions successives lors d'un balayage du champ élargi et le champ intrinsèque. Chaque balayage est en général effectué avec le même taux de recouvrement $R_m$.

Le décalage entre balayages est défini, par exemple, par un couple de coordonnées égales aux différences entre les coordonnées de la position de la première portion d'un balayage et les coordonnées de la position de la première portion d'un balayage successif. Choisir un décalage entre deux balayages successifs pour lequel les coordonnées du couple de coordonnées sont toutes deux non-nulles permet d'obtenir des images de portions différentes à chaque balayage.

L'utilisateur peut, s'il le souhaite, modifier les paramètres auxiliaires. En particulier, l'utilisateur peut modifier le taux de recouvrement $R_m$ s'il désire, par exemple, que le balayage du champ élargi soit plus ou moins rapide.

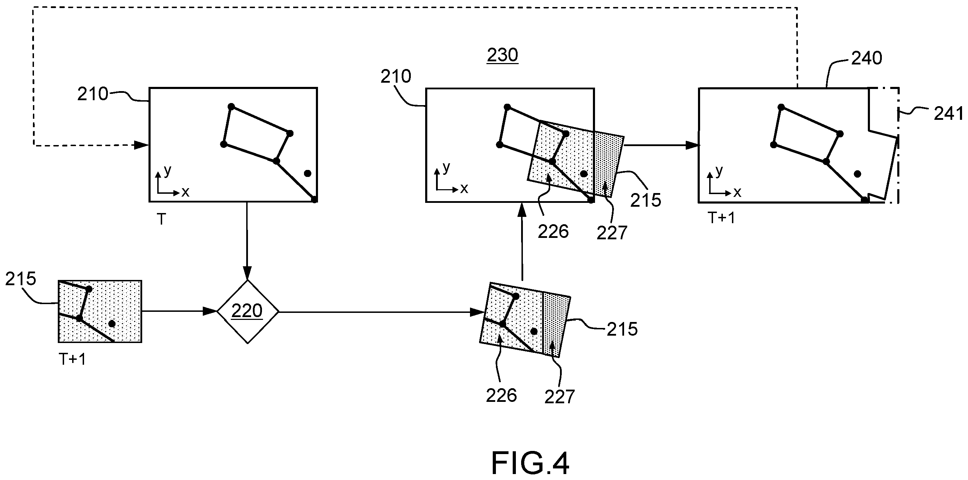

La FIG. 4 illustre des étapes d'un procédé d'imagerie astronomique en champ élargi selon la présente description, pouvant par exemple être implémenté avec le dispositif de la FIG. 2.

En particulier la FIG. 4 illustre une étape effectuée de façon itérative lors de l'acquisition d'une pluralité d'images brutes correspondant à des portions d'un chemin de champ afin d'obtenir une image en champ élargi.

Dans la FIG. 4, à un temps donné T+1, une image brute 215 est acquise par le dispositif 100 pour augmenter le champ d'une image étendue 210 obtenue à un temps antérieur T. Le procédé selon la présente description étant itératif, l'image étendue 210 obtenue à un temps antérieur T est elle-même calculée à partir d'une image brute acquise à un temps T et d'une image étendue obtenue à un temps T-1. La première étape (T = 0, non-illustrée sur la FIG. 4) correspond à l'acquisition d'une première image brute, l'image étendue étant alors confondue avec cette première image brute.

On cherchera généralement à ce que les deux images brutes acquises respectivement à T et T+1 soit deux images acquises successivement, c'est-à-dire séparées d'un intervalle de temps minimal, égal par exemple à l'inverse de la cadence d'acquisition du dispositif d'imagerie. Néanmoins, il peut arriver que l'intervalle de temps soit parfois plus grand dans certaines conditions, par exemple en présence d'une anomalie lors de l'acquisition des images ou une erreur rendant une des images brutes inutilisable.

Dans une étape de recalage 220, l'image brute 215 acquise au temps T+1 est comparée à l'image étendue 210 pour identifier une partie commune. Le recalage de deux images est une mise en correspondance des deux images en recherchant une transformation géométrique d'une des images permettant de superposer, dans les deux images, les points correspondant à des points identiques de la scène.

Lors de la comparaison, il s'agit d'établir une correspondance entre certains points de l'image brute 215 et certains points de l'image étendue 210 pour déterminer les points de l'image brute 215 qui correspondent à des points identiques du champ objet dans l'image étendue, appelés points communs 226 dans la présente description.

Les points de l'image brute 215 qui ne sont pas des points communs 226 (et qui sont appelés points nouveaux 227 dans la présente description) sont donc des points qui correspondent à des points du champ objet qui n'ont pas encore été imagés.

Différents types de transformations géométriques de l'image brute 215 peuvent être utilisés pour mettre en correspondance des points de l'image brute 215 et des points de l'image étendue 210, par exemple des rotations, des translations, des homothéties et des homographies. Ces transformations sont connues de l'homme du métier.

Cependant, ces transformations géométriques sont des fonctions mathématiques continues alors que les images brutes 215 sont échantillonnées. L'absence de déphasage entre les échantillonnages de l'image étendue 210 et de l'image brute 215 ne peut donc pas être assuré et il est difficile de garantir qu'à chaque point de l'image brute 215 correspond exactement un seul point de l'image étendue 210, limitant ainsi les points communs 226. Ainsi, dans le procédé et le dispositif selon la présente description, après que la transformation géométrique adéquate a été identifiée, une interpolation des points de l'image brute 215 peut être effectuée afin de pallier au sous-échantillonnage de l'image brute 215 et d'assurer que chaque point de l'image étendue 210 qui correspond à un point du champ objet de l'image brute 215 soit associé, par calcul, à un point commun 226. Ladite interpolation est une technique de sur-échantillonnage de l'image brute 215 qui est notamment à distinguer des techniques de *« drizzle »* dans lesquelles un sur-échantillonnage est réalisé sans interpolation mais en acquérant une grande quantité d'images brutes de la même scène avec un faible décalage dans le champ objet afin de « remplir » l'information manquante.

Dans un exemple de réalisation pour un cas simple illustrée sur la FIG. 4, la scène imagée est considérée comme plane et le mouvement de la scène par rapport au plan focal du système optique est la composition d'une translation et d'une rotation, un modèle de transformation géométrique utilisant une translation et une rotation peut donc être utilisé pour mettre en correspondance l'image brute 215 et l'image étendue 210.

Dans des exemples de réalisation plus complexes, où la scène imagée n'est pas plane et/ou où le mouvement de la scène par rapport au plan focal du système optique comprend plusieurs rotations et translations, un modèle de transformation géométrique utilisant, par exemple, des combinaisons de translations, rotations et homothéties peut être utilisé pour mettre en correspondance des images brutes et des images étendues.

Une fois les points communs 226 et les points nouveaux 227 de l'image brute 215 identifiés, une étape 230 de complétion est effectuée pour obtenir au temps T+1, une nouvelle image étendue 240 à partir de l'image brute 215 et de l'image étendue 210 au temps T.

D'une part, les valeurs numériques des points communs 226 de l'image brute 215 sont sommés aux valeurs des points de l'image étendue 210 auxquels ils correspondent, c'est-à-dire aux points de l'image étendue 210 qui correspondent aux mêmes points du champ objet. La sommation peut comprendre par exemple une sommation simple, une sommation pondérée, une sommation conditionnelle ou une combinaison de ces opérations.

D'autre part, les points nouveaux 227 de l'image brute 215 sont adjoints à ceux de l'image étendue 210 pour former une nouvelle image étendue 240 de taille supérieure à l'image étendue 210. On dit que l'on « complète » l'image étendue 210 avec les points nouveaux 227 de l'image brute 215, qui sont des points qui correspondent à des points du champ objet non-compris dans l'image étendue 210.

Selon certains modes de réalisation, après calcul de l'image étendue, l'image étendue peut en outre être complétée par une pluralité de points auxquels il est attribué une valeur donnée (par exemple nulle) afin d'obtenir une image étendue rectangulaire 241. Cela permet de faciliter le calcul numérique qui est plus adapté à des images rectangulaires.

En vertu du procédé selon la présente description, après avoir acquis plusieurs images brutes il est possible d'obtenir une image étendue de taille supérieure à chacune des images brutes et ayant un SNR supérieur au SNR de chacune des images brutes sur les zones de recouvrement.

Par exemple, dans une imagé étendue calculée après avoir acquis deux images brutes de SNR donné *SNRx*, le SNR des points correspondant à une zone de recouvrement entre les deux images brutes aura un SNR théorique égal à $SNRb = \sqrt{2}\, SNRx$. Ainsi, de façon avantageuse lorsqu'un fort taux de recouvrement est utilisé (par exemple supérieur à 85%), le procédé selon la présente description permet d'obtenir une image en champ élargi dont le SNR est accru par rapport au SNR des images brutes *SNRx* pour un grand nombre de point. L'accroissement de SNR est proche de la limite théorique atteignable, c'est-à-dire la limite obtenue pour un taux de recouvrement de 100%.

Par contraste, dans les procédés de l'art antérieur, les zones de recouvrement ne sont en général pas utilisées pour augmenter le SNR de l'image en champ élargi. Ainsi, une fois que deux images empilées de portions différentes de la scène sont recalées, l'information provenant d'une seule des deux images est utilisée pour obtenir les points de l'image en champ élargi correspondant à la zone de recouvrement entre les deux portions.

Bien que décrite à travers un certain nombre d'exemples de réalisation, les procédés et les dispositifs d'imagerie astronomique en champ élargi selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Références**

[REF 1] SZELISKI, Richard. Image alignment and stitching. In : Handbook of mathematical models in computer vision. Springer, Boston, MA, p. 273-292, 2006 [REF 2] POPOWICZ, Adam, KUREK, Aleksander, POLLO, Agnieszka, et al. "Beyond the current noise limit in imaging through turbulent medium ". Optics letters, 2015, vol. 40, no 10, p. 2181-2184 [REF 3] Veer Ekant: "Making Milky Way Panoramas - AMATEUR ASTROPHOTOGRAPHY- Astrophotography", 5 décembre 2019 (2019-12-05), XP055815606 [REF 4] US 2006/245640 A1 (SZCZUKA STEVEN J [US]) 2 novembre 2006 (2006-11-02)

**Revendications**

1. Dispositif (100) d'imagerie astronomique en champ élargi d'une scène comprenant :

   un système optique (101) comprenant un axe optique (270) mobile en rotation selon au moins deux axes de rotation ;
   un détecteur optique (102) bidimensionnel comprenant une surface de détection sensiblement perpendiculaire audit axe optique, ladite surface de détection définissant, avec le système optique, un champ intrinsèque donné, ledit détecteur (102) bidimensionnel étant configuré pour l'acquisition, au moyen dudit système optique (101), d'images brutes de portions de ladite scène de dimensions égales aux dimensions du champ intrinsèque ;
   une unité de contrôle (104) configurée pour le contrôle de la rotation dudit axe optique, de telle sorte à permettre l'acquisition, au cours du temps, par le détecteur optique (102), d'au moins une première pluralité d'images brutes d'une pluralité de portions différentes de ladite scène, ladite première pluralité d'images brutes comprenant un nombre strictement supérieur à 2 d'images brutes de portions différentes de la scène, la superposition desdites portions formant ledit champ élargi, deux portions successives de ladite pluralité de portions présentant au moins une partie commune, ladite au moins une première pluralité d'images brutes correspondant respectivement à une pluralité de positions dudit axe optique ; et
   une unité de traitement (105) configurée pour le calcul, pour chaque acquisition d'une image brute (215) à un temps donné, d'une image étendue (240) de taille plus grande qu'une image étendue (210) calculée précédemment, ladite image étendue (240) étant calculée à partir de ladite image étendue (210) calculée précédemment et de ladite image brute (215).

2. Dispositif selon la revendication 1, dans lequel ladite image étendue est calculée à partir de l'image étendue calculée précédemment:

   en sommant les valeurs de points de l'image étendue calculée précédemment aux valeurs de points de l'image brute qui correspondent à des points identiques du champ objet ; et
   en complétant l'image étendue calculée précédemment par des points de l'image brute qui correspondent à des points du champ objet non compris dans l'image étendue calculée précédemment.

3. Dispositif selon l'une quelconque des revendications précédentes, dans lequel ladite partie commune entre deux portions successives de ladite pluralité de portions présente une surface supérieure ou égale à environ 85% du champ intrinsèque et strictement inférieure à 100% du champ intrinsèque.

4. Dispositif selon l'une quelconque des revendications précédentes, dans lequel ladite partie commune entre deux portions successives de ladite pluralité de portions présente une surface strictement supérieure à 90% du champ intrinsèque et strictement inférieure à 100% du champ intrinsèque.

5. Dispositif selon l'une quelconque des revendications précédentes, dans lequel le contrôle dudit axe optique comprend une compensation, au moins partielle, des effets de la rotation de la Terre sur la position des portions dans la scène.

6. Procédé d'imagerie astronomique en champ élargi d'une scène comprenant :

   l'acquisition, au cours du temps, au moyen d'un dispositif d'imagerie astronomique, d'au moins une première pluralité d'images brutes d'une pluralité de portions différentes de ladite scène, chaque portion présentant des dimensions égales aux dimensions d'un champ intrinsèque du dispositif d'imagerie, ladite première pluralité d'images brutes comprenant un nombre strictement supérieur à 2 d'images brutes de portions différentes de la scène, la superposition desdites portions formant ledit champ élargi, deux portions successives de ladite pluralité de portions présentant au moins une partie commune ; et
   le calcul, pour chaque acquisition d'une image brute (215) à un temps donné, d'une image étendue (240) de taille plus grande qu'une image étendue (210) calculée précédemment, ladite image étendue (240) étant calculée à partir de ladite image étendue (210) calculée précédemment et de ladite image brute (215).

7. Procédé selon la revendication 6, dans lequel ladite image étendue est calculée à partir de l'image étendue calculée précédemment :

en sommant les valeurs des points de l'image étendue calculée précédemment aux valeurs des points de l'image brute qui correspondent à des points identiques du champ objet ; et
en complétant l'image étendue calculée précédemment par des points de l'image brute qui correspondent à des points du champ objet non compris dans l'image étendue calculée précédemment.

8. Procédé selon l'une quelconque des revendications 6 à 7, comprenant en outre, après l'acquisition de chaque image brute, une étape de filtrage de ladite image brute avant le calcul de l'image étendue.

9. Procédé selon l'une quelconque des revendications 6 à 8, dans lequel ladite pluralité de portions de la scène est déterminée à partir d'un temps d'observation prédéterminé.

10. Procédé selon l'une quelconque des revendications 6 à 9, dans lequel le calcul, pour chaque acquisition d'une image brute (215) à un temps donné, d'une image étendue (240) de taille plus grande qu'une image étendue (210) calculée précédemment comprend un sur-échantillonnage de l'image brute (215) par interpolation de l'image brute (215).

11. Procédé selon l'une quelconque des revendications 6 à 10, comprenant en outre l'acquisition d'au moins une deuxième pluralité d'images brutes de portions de ladite scène, de façon à balayer au moins une deuxième fois le champ élargi.

12. Procédé selon l'une quelconque des revendications 6 à 11, dans lequel ladite partie commune entre deux portions successives de ladite pluralité de portions présente une surface supérieure ou égale à environ 85% du champ intrinsèque et strictement inférieure à 100% du champ intrinsèque.

13. Procédé selon l'une quelconque des revendications 6 à 12, dans lequel ladite partie commune entre deux portions successives de ladite pluralité de portions présente une surface strictement supérieure à 90% du champ intrinsèque et strictement inférieure à 100% du champ intrinsèque.

**Patentansprüche**

1. Vorrichtung (100) zur astronomischen Weitfeldbildgebung einer Szene, umfassend:

ein optisches System (101), das eine optische Achse (270) umfasst, die um mindestens zwei Drehachsen drehbeweglich ist;
einen zweidimensionalen optischen Detektor (102), der eine Detektionsfläche umfasst, die zu der optischen Achse im Wesentlichen senkrecht ist, wobei die Detektionsfläche mit dem optischen System ein gegebenes intrinsisches Feld definiert, wobei der zweidimensionale Detektor (102) für die Erfassung, mittels des optischen Systems (101), von Rohbildern von Abschnitten der Szene mit Abmessungen, die gleich den Abmessungen des intrinsischen Feldes sind, ausgelegt ist;
eine Steuereinheit (104), die für die Steuerung der Drehung der optischen Achse derart, dass die Erfassung, im Laufe der Zeit, mindestens einer ersten Vielzahl von Rohbildern einer Vielzahl von verschiedenen Abschnitten der Szene durch den optischen Detektor (102) ermöglicht wird, ausgelegt ist, wobei die erste Vielzahl von Rohbildern eine Anzahl von Rohbildern verschiedener Abschnitte der Szene umfasst, die streng größer als 2 ist, wobei die Überlagerung dieser Abschnitte das Weitfeld bildet, wobei zwei aufeinander folgende Abschnitte der Vielzahl von Abschnitten mindestens einen gemeinsamen Teil aufweisen, wobei die mindestens eine erste Vielzahl von Rohbildern einer Vielzahl jeweiliger Positionen der optischen Achse entspricht; und
eine Verarbeitungseinheit (105), die für die Berechnung, für jede Erfassung eines Rohbildes (215) zu einem gegebenen Zeitpunkt, eines erweiterten Bildes (240) mit einer Größe, die größer als die eines zuvor berechneten erweiterten Bildes (210) ist, ausgelegt ist, wobei dieses erweiterte Bild (240) aus dem zuvor berechneten erweiterten Bild (210) und dem Rohbild (215) berechnet wird.

2. Vorrichtung nach Anspruch 1, wobei das erweiterte Bild aus dem zuvor berechneten erweiterten Bild berechnet wird:

indem die Werte von Punkten des zuvor berechneten erweiterten Bildes zu den Werten von Punkten des Rohbildes, die identischen Punkten des Objektfeldes entsprechen, addiert werden; und
indem das zuvor berechnete erweiterte Bild durch Punkte des Rohbildes ergänzt wird, welche Punkten des Objektfedes entsprechen, die nicht in dem zuvor berechneten erweiterten Bild enthalten sind.

3. Vorrichtung nach einem der vorhergehenden Ansprüche, wobei der Teil, der zwei aufeinander folgenden Abschnitten der Vielzahl von Abschnitten gemeinsam ist, eine Fläche aufweist, die größer oder gleich ungefähr 85 % des intrinsischen Feldes und streng kleiner als 100 % des intrinsischen Feldes ist.

4. Vorrichtung nach einem der vorhergehenden Ansprüche, wobei der Teil, der zwei aufeinander folgenden Abschnitten der Vielzahl von Abschnitten gemeinsam ist, eine Fläche aufweist, die streng größer als 90 % des intrinsischen Feldes und streng kleiner als 100 % des intrinsischen Feldes ist.

5. Vorrichtung nach einem der vorhergehenden Ansprüche, wobei die Steuerung der optischen Achse eine wenigstens teilweise Kompensation der Auswirkungen der Rotation der Erde auf die Position der Abschnitte in der Szene umfasst.

6. Verfahren zur astronomischen Weitfeldbildgebung einer Szene, welches Folgendes umfasst:

die Erfassung, im Laufe der Zeit, mittels einer Vorrichtung zur astronomischen Bildgebung, mindestens einer ersten Vielzahl von Rohbildern einer Vielzahl von verschiedenen Abschnitten der Szene, wobei jeder Abschnitt Abmessungen aufweist, die gleich den Abmessungen eines intrinsischen Feldes der Bildgebungsvorrichtung sind, wobei die erste Vielzahl von Rohbildern eine Anzahl von Rohbildern verschiedener Abschnitte der Szene umfasst, die streng größer als 2 ist, wobei die Überlagerung dieser Abschnitte das Weitfeld bildet, wobei zwei aufeinander folgende Abschnitte der Vielzahl von Abschnitten mindestens einen gemeinsamen Teil aufweisen; und
die Berechnung, für jede Erfassung eines Rohbildes (215) zu einem gegebenen Zeitpunkt, eines erweiterten Bildes (240) mit einer Größe, die größer als die eines zuvor berechneten erweiterten Bildes (210) ist, wobei dieses erweiterte Bild (240) aus dem zuvor berechneten erweiterten Bild (210) und dem Rohbild (215) berechnet wird.

7. Verfahren nach Anspruch 6, wobei das erweiterte Bild aus dem zuvor berechneten erweiterten Bild berechnet wird:

indem die Werte der Punkte des zuvor berechneten erweiterten Bildes zu den Werten der Punkte des Rohbildes, die identischen Punkten des Objektfeldes entsprechen, addiert werden;

und
indem das zuvor berechnete erweiterte Bild durch Punkte des Rohbildes ergänzt wird, welche Punkten des Objektfedes entsprechen, die nicht in dem zuvor berechneten erweiterten Bild enthalten sind.

8. Verfahren nach einem der Ansprüche 6 bis 7, welches außerdem, nach der Erfassung jedes Rohbildes, einen Schritt des Filterns des Rohbildes vor der Berechnung des erweiterten Bildes umfasst.

9. Verfahren nach einem der Ansprüche 6 bis 8, wobei die Vielzahl von Abschnitten der Szene aus einer vorbestimmten Beobachtungszeit bestimmt wird.

10. Verfahren nach einem der Ansprüche 6 bis 9, wobei die Berechnung, für jede Erfassung eines Rohbildes (215) zu einem gegebenen Zeitpunkt, eines erweiterten Bildes (240) mit einer Größe, die größer als die eines zuvor berechneten erweiterten Bildes (210) ist, eine Überabtastung des Rohbildes (215) durch Interpolation des Rohbildes (215) umfasst.

11. Verfahren nach einem der Ansprüche 6 bis 10, welches außerdem die Erfassung mindestens einer zweiten Vielzahl von Rohbildern von Abschnitten der Szene umfasst, um das Weitfeld mindestens ein zweites Mal abzutasten.

12. Verfahren nach einem der Ansprüche 6 bis 11, wobei der Teil, der zwei aufeinander folgenden Abschnitten der Vielzahl von Abschnitten gemeinsam ist, eine Fläche aufweist, die größer oder gleich ungefähr 85 % des intrinsischen Feldes und streng kleiner als 100 % des intrinsischen Feldes ist.

13. Verfahren nach einem der Ansprüche 6 bis 12, wobei der Teil, der zwei aufeinander folgenden Abschnitten der Vielzahl von Abschnitten gemeinsam ist, eine Fläche aufweist, die streng größer als 90 % des intrinsischen Feldes und streng kleiner als 100 % des intrinsischen Feldes ist.

**Claims**

1. A device (100) for enlarged-field astronomical imaging of a scene, comprising:

an optical system (101) comprising an optical axis (270) rotatable along at least two axes of rotation;
a two-dimensional optical detector (102) comprising a detection surface substantially perpendicular to said optical axis, said detection surface defining, with the optical system, a given intrinsic field, said two-dimensional detector (102) being configured for the acquisition, by means of said optical system (101), of raw images of portions of said scene of dimensions equal to the dimensions of the intrinsic field; a control unit (104) configured to control the rotation of said optical axis, so as to enable the acquisition, over time, by the optical detector (102), of at least a first plurality of raw images of a plurality of different portions of said scene, said first plurality of raw images comprising a number strictly greater than 2 of raw images of different portions of the scene, the superposition of said portions forming said enlarged field, two successive portions of said plurality of portions having at least one common part, said at least one first plurality of raw images corresponding respectively to a plurality of positions of said optical axis; and a processing unit (105) configured for calculating, for each acquisition of a raw image (215) at a given time, an extended image (240) of larger size than an extended image (210) calculated previously, said extended image (240) being calculated from said extended image (210) calculated previously and from said raw image (215).

2. The device as claimed in claim 1, wherein said extended image is calculated from the previously calculated extended image:

   by summing the values of points in the previously calculated extended image with the values of points in the raw image which correspond to identical points in the object field; and by supplementing the previously calculated extended image with points in the raw image which correspond to points in the object field not included in the previously calculated extended image.

3. The device according to any one of the preceding claims, in which said common part between two successive portions of said plurality of portions has an area greater than or equal to approximately 85% of the intrinsic field and strictly less than 100% of the intrinsic field.

4. The device according to any one of the preceding claims, in which said common part between two successive portions of said plurality of portions has an area strictly greater than 90% of the intrinsic field and strictly less than 100% of the intrinsic field.

5. The device according to any one of the preceding claims, in which the control of said optical axis comprises a compensation, at least partial, for the effects of the Earth's rotation on the position of portions in the scene.

6. A method of enlarged-field astronomical imaging of a scene comprising:

   the acquisition, over time, by means of an astronomical imaging device, of at least a first plurality of raw images of a plurality of different portions of said scene, each portion having dimensions equal to the dimensions of an intrinsic field of the imaging device, said first plurality of raw images comprising a number strictly greater than 2 of raw images of different portions of the scene, the superimposition of said portions forming said enlarged field, two successive portions of said plurality of portions having at least one common part; and the calculation, for each acquisition of a raw image (215) at a given time, of an extended image (240) of larger size than an extended image (210) calculated previously, said extended image (240) being calculated from said extended image (210) calculated previously and from said raw image (215).

7. The method according to claim 6, wherein said extended image is calculated from the previously calculated extended image:
   by summing the values of the points in the previously calculated extended image with the values of the points in the raw image which correspond to identical points in the object field; and by supplementing the previously calculated extended image with points in the raw image which correspond to points in the object field not included in the previously calculated extended image.

8. The method according to any one of claims 6 to 7, further comprising, after the acquisition of each raw image, a step of filtering said raw image before calculating the extended image.

9. The method according to any one of claims 6 to 8, wherein said plurality of portions of the scene is determined from a predetermined observation time.

10. The method according to any one of claims 6 to 9, in which the calculation, for each acquisition of a raw image (215) at a given time, of an extended image (240) of larger size than an extended image (210) calculated previously comprises an oversampling of the raw image (215) by interpolation of the raw image (215).

11. The method according to any one of claims 6 to 10, further comprising the acquisition of at least a second plurality of raw images of portions of said scene, to scan the enlarged field at least a second time.

**12.** The method according to any one of claims 6 to 11, wherein said common part between two successive portions of said plurality of portions has an area greater than or equal to approximately 85% of the intrinsic field and strictly less than 100% of the intrinsic field.

**13.** The method according to any one of claims 6 to 12, wherein said common part between two successive portions of said plurality of portions has an area strictly greater than 90% of the intrinsic field and strictly less than 100% of the intrinsic field.

(ART ANTERIEUR)

FIG.1

FIG.2

FIG.3A

FIG.3B

FIG.3C

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006245640 A1, SZCZUKA STEVEN J
- US 20061102 A1

**Littérature non-brevet citée dans la description**

- Image alignment and stitching. **SZELISKI, RICHARD**. In : Handbook of mathematical models in computer vision. Springer, 2006, 273-292
- **POPOWICZ, ADAM** ; **KUREK, ALEKSANDER** ; **POLLO, AGNIESZKA et al.** Beyond the current noise limit in imaging through turbulent medium. *Optics letters*, 2015, vol. 40 (10), 2181-2184
- **VEER EKANT**. Making Milky Way Panoramas - AMATEUR ASTROPHOTOGRAPHY- Astrophotography. *XP055815606*, 05 December 2019